# EUROPÄISCHE PATENTSCHRIFT

(11) **EP 3 684 714 B1**
(45) Veröffentlichungstag und Bekanntmachung des Hinweises auf die Patenterteilung: **29.03.2023**
(21) Anmeldenummer: 18772747.4
(22) Anmeldetag: 05.09.2018
(51) Int. Cl.: B65G 15/58, B65G 19/02, B65B 5/10, B65B 7/20, B65G 47/14

(54) **AUFGABEEINRICHTUNG ZUR AUFGABE VON PRODUKTEN AUF EIN FÖRDERBAND**
FEEDING DEVICE FOR FEEDING PRODUCTS ONTO A CONVEYOR BELT
DISPOSITIF DE DISTRIBUTION PERMETTANT LA DISTRIBUTION DE PRODUITS SUR UNE BANDE TRANSPORTEUSE

(30) Priorität: 18.09.2017 DE 102017121560
(43) Veröffentlichungstag der Anmeldung: 29.07.2020
(73) Patentinhaber: Dickfeld, Nils, 64665 Alsbach-Hähnlein (DE)
(72) Erfinder: Dickfeld, Nils, 64665 Alsbach-Hähnlein (DE)
(74) Vertreter: Habermann Intellectual Property Partnerschaft von Patentanwälten mbB
(86) Internationale Anmeldenummer: PCT/EP2018/073803
(87) Internationale Veröffentlichungsnummer: WO 2019/052861

(56) Entgegenhaltungen:
- JP-A- H06 177 587
- JP-U- H0 252 822
- JP-U- H0 426 915
- JP-U- H0 461 678
- JP-U- S6 023 127
- JP-U- H01 109 014
- US-A- 4 094 129
- US-A- 4 248 027
- US-A1- 2015 203 226

## Beschreibung

Die Erfindung betrifft ein Förderband mit einer Aufgabeeinrichtung zur Aufgabe von Produkten aus einem Vorratsbehälter auf ein in einer Förderrichtung bewegtes Förderband, wobei ein Aufgabeband an einer Vorratsbehälteröffnung an einer Unterseite des Vorratsbehälters zu fördernde Produkte aufnimmt und zu einer Oberseite des Förderbands transportiert, um die Produkte in einem Aufgabebereich auf der Oberseite des Förderbands auf das Förderband abzugeben.

Aus der Praxis sind zahlreiche unterschiedliche Förderbänder bekannt, mit denen darauf befindliche Produkte in einer durch den Verlauf des Förderbands vorgegebenen Förderrichtung befördert werden können. Die zu befördernden Produkte werden dabei üblicherweise auf einer Oberseite des Förderbands aufgebracht und von dem Förderband über eine vorgegebene Förderstrecke befördert, bis die Produkte am Ende der Förderstrecke von dem Förderband abgenommen werden oder einer weiteren Verarbeitung oder einer Beförderung der Produkte zugeführt werden. Als Förderband kann beispielsweise ein flexibles Endlosband verwendet werden, das von einer Anordnung von Walzen oder Rollen in einem kontinuierlichen Umlauf geführt wird. Anstelle eines flexiblen Förderbands kann auch eine aus mehreren Bandelementen zusammengesetzt Förderkette eingesetzt werden. Es sind auch Rollen- oder Walzenbahnen bekannt, bei denen eine Anzahl von hintereinander angeordneten und quer zur Förderrichtung um eine Drehachse drehbar gelagerten Walzenrollen eine Förderbahn bilden, auf welcher die Produkte entlang rollen können.

Bei größeren Produkten wie beispielsweisen Paketen oder Koffern ist es oftmals nicht erforderlich, diese in einer positionskontrollierten Weise auf das Förderband aufzugeben, da die einzelnen Pakete oder Koffer üblicherweise nicht nebeneinander auf dem Förderband angeordnet werden müssen und auch ein Abstand zwischen zwei aufeinanderfolgenden Paketen oder Koffern variieren kann. Dagegen ist es bei anderen, üblicherweise kleinen Produkten häufig wünschenswert, die einzelnen Produkte in einer möglichst präzise vorgegebenen Anordnung auf das Förderband aufzugeben. So ist es beispielsweise für eine automatisiert durchgeführte Qualitätskontrolle oder für eine nachfolgende Weiterverarbeitung der Produkte in einer weiterverarbeitenden Produktionsanlage von Vorteil, wenn die einzelnen Produkte in einem vorgebbaren Abstand zueinander auf dem Förderband angeordnet sind und befördert werden.

Die aus der Praxis bekannten Aufgabeeinrichtungen ermöglichen oftmals keine kontrollierte Aufgabe bzw. Anordnung einzelner Produkte auf dem Förderband. Insbesondere bei rollfähigen Produkten, wie beispielsweise Tabletten, Kapseln oder auch Schrauben oder Ampullen, kann eine kontrollierte Aufgabe der einzelnen Produkte auf das Förderband üblicherweise nur durch eine aufwändige Vereinzelung der Produkte vorab und eine gesonderte Zuführung der Produkte durch gesonderte und oftmals auch räumlich voneinander getrennte Zuführungseinrichtungen bewirkt werden.

Bei einem unmittelbar oberhalb des Förderbands angeordneten Vorratsbehälter ist der für die Vereinzelung und gesonderte Zuführung zur Verfügung stehende Raum oftmals nicht ausreichend. Zu diesem Zweck kann zwischen einem Vorratsbehälter, in dem die zu befördernden Produkte zunächst gesammelt und bevorratet sind, und dem Förderband ein Aufgabeband angeordnet sein, mit dessen Hilfe eine kontrollierte Aufgabe der einzelnen Produkte auf das Förderband erleichtert wird. Während des Transports der Produkte vom Vorratsbehälter zum Förderband kann längs der durch das Aufgabeband vorgegebenen Transportstrecke eine Vereinzelung und gezielt vorgegebene Anordnung der Produkte erfolgen.

Das Förderband kann auch Bestandteil einer größeren Verarbeitungsanlage für die Produkte sein. Falls der Vorratsbehälter nicht unmittelbar oberhalb des Förderbands angeordnet werden soll, wie es in der Praxis oftmals gewünscht wird, können die für das Förderband bestimmten Produkte von einem seitlich neben dem Förderband angeordneten Vorratsbehälter über das Aufgabeband zu dem Förderband transportiert und am Ende des Aufgabebands auf das Förderband aufgegeben werden. JP H02 52822 U offenbart ein Förderband mit einer Aufgabeeinrichtung nach dem Oberbegriff des Anspruchs 1.

Es wird als eine Aufgabe der vorliegenden Erfindung angesehen, eine Aufgabeeinrichtung zur Aufgabe von Produkten auf ein Förderband so auszugestalten, dass mit möglichst geringem Aufwand eine möglichst große Anzahl von Produkten zuverlässig in jeweils vorgegebenen Positionen auf dem Förderband angeordnet werden kann.

Diese Aufgabe wird erfindungsgemäß mit den Merkmalen des Anspruchs 1 gelöst, wobei das Aufgabeband eine Anzahl von Löchern aufweist, deren Abmessungen derart an die zu fördernden Produkte angepasst ist, dass jeweils ein Produkt durch ein zugeordnetes Loch hindurch fallen kann, und dass an einer Unterseite des Aufgabebands ein sich von der Vorratsbehälteröffnung bis zu dem Aufgabebereich auf der Oberseite des Förderbands erstreckende Führungselement mit einer unmittelbar unterhalb des Aufgabebands angeordneten Führungsfläche angeordnet ist, so dass die Führungsfläche ein Hindurchfallen der Produkte durch die Löcher des Aufgabebandes verhindert, bis die Produkte in dem Aufgabebereich auf die Oberseite des Förderbands abgegeben werden. Die in dem Aufgabeband befindlichen Löcher dienen zur Aufnahme von jeweils einem Produkt. Durch die Anordnung der Löcher in dem Aufgabeband kann die Anordnung der Produkte in dem Aufgabeband vorgegeben werden. Es muss lediglich sichergestellt werden, dass aus der Vorratsbehälteröffnung an der Unterseite des Vorratsbehälters nur dann ein Produkt austreten kann, wenn es in einem noch freien Loch des Aufgabebands aufgenommen werden kann. Dies kann in einfacher Weise beispielsweise durch Abstreifer, flexible Lippen oder rotierende Bürsten gewährleistet werden, die im Bereich der Vorratsbehälteröffnung unmittelbar oberhalb einer der Vorratsbehälteröffnung zugewandten Oberseite des Aufgabebands angeordnet sind und alle Produkte zurückhalten, die nicht in einem Loch in dem Aufgabeband aufgenommen sind.

Die unmittelbar unterhalb des Aufgabebands angeordnete Führungsfläche des Führungselements verhindert, dass ein in einem Loch des Aufgabebands aufgenommenes Produkt durch das betreffende Loch hindurch fällt. Durch die Transportbewegung des Aufgabebands wird das in dem betreffenden Loch des Aufgabebands befindliche Produkt über die Führungsfläche des Führungselements hinweg geschoben und bis zu dem Aufgabebereich auf der Oberseite des Förderbands transportiert. Dort endet das Führungselement, so dass die über das Ende des Führungselements hinweg transportierten Produkte durch das nunmehr freigegebene Loch des Aufgabebands hindurch fallen und an der durch das Ende des Führungselements vorgegebene Position auf die Oberseite des Förderbands herabfallen bzw. aufgegeben werden.

Die Abmessungen der Löcher in dem Aufgabeband sind dabei so an die Abmessungen der zu transportierenden Produkte angepasst, dass in jedem Loch nur jeweils ein Produkt aufgenommen werden kann und das dort aufgenommene Produkt durch das Loch hindurch fallen kann, wenn unterhalb des Aufgabeband keine Führungsfläche des Führungselements mehr angeordnet ist. Bei nicht kugelförmigen Produkten, die beispielsweise in eine Raumrichtung eine größere Erstreckung als in eine andere Raumrichtung aufweisen, kann durch die Formgebung der Löcher in dem Aufgabeband bereits eine Ausrichtung der einzelnen Produkte in den jeweils zugeordneten Löchern vorgegeben werden. Das Aufgabeband kann eine Dicke aufweisen, die an die Abmessungen der zu transportierenden Produkte angepasst ist, so dass ein in einem Loch in dem Aufgabeband angeordnetes Produkt, das auf der darunter befindlichen Führungsfläche aufliegt, mit einer davon abgewandten Oberseite nicht oder nur geringfügig über eine Oberseite des Aufgabebands hinausragt. Das Aufgabeband ist zweckmäßigerweise ausreichend dick, um durch eine ein Loch in Umfangsrichtung begrenzende Lochwand eine ausreichend große Anlagefläche für das in dem Loch aufgenommene Produkt bereitzustellen, so dass ein transportieren bzw. Verschieben des Produkts auf der Führungsfläche zuverlässig bewirkt werden kann.

Das Aufgabeband kann aus einem flexiblen oder elastischen Bandmaterial, beispielweise aus einem geeigneten Kunststoffmaterial hergestellt und als Endlosband ausgestaltet sein. Es ist ebenfalls denkbar, dass das Aufgabeband aus einer Anzahl miteinander verbundenen Bandgliedern zusammengesetzt ist, die jeweils beweglich mit benachbarten Bandgliedern verbunden sind. Die einzelnen Löcher können eine konstante Querschnittsfläche aufweisen. Es ist ebenfalls denkbar, dass eine ein Loch begrenzende Lochwand eine kegelstumpfmantelförmige oder eine bauchige Formgebung aufweist.

Einer vorteilhaften Ausgestaltung zufolge ist vorgesehen, dass in dem Aufnahmeband quer zur Transportrichtung mehrere Löcher beabstandet zueinander angeordnet sind. In einer Lochreihe, die durch die mehreren quer zur Transportrichtung angeordneten Löcher gebildet wird, kann gleichzeitig eine entsprechende Anzahl von Produkten transportiert und anschließend gleichzeitig auf das Förderband aufgegeben werden. Auf diese Weise kann eine vergleichsweise große Anzahl von Produkten innerhalb kurzer Zeit kontrolliert bzw. in einer jeweils vorgegebenen Position und Anordnung auf das Förderband aufgegeben werden.

Im Hinblick auf einen möglichst hohen Durchsatz an Produkten ist es vorteilhaft, dass in dem Aufgabeband die Löcher matrixförmig angeordnet sind. Die Löcher können in einer Anzahl von Lochreihen angeordnet sein, die quer zur Transportrichtung angeordnet und in einem jeweils gleichbleibenden Abstand in Transportrichtung zueinander angeordnet sind.

Im Hinblick auf eine möglichst einfache und kostengünstige Herstellung der Aufgabeeinrichtung ist es vorteilhaft, dass das Führungselement ein unterhalb des Aufgabebands angeordnetes Führungsblech ist. Ein solches Führungselement lässt sich in einfacher Weise und kostengünstig aus einem Blechzuschnitt herstellen. Durch eine geeignete Vorgabe des Blechmaterials kann eine für den Transport der darauf verschobenen Produkte geeignete Führungsfläche gebildet bzw. bereitgestellt werden. Das Führungsblech kann ohne großen Aufwand an den Verlauf des Aufgabebandes angepasst werden und dabei beispielsweise eine angepasste Krümmung in der Transportrichtung oder quer dazu aufweisen.

Gemäß einer vorteilhaften Ausgestaltung ist vorgesehen, dass die Führungsfläche des Führungselements eine reibungsarme und abriebfeste ebene Gleitfläche bildet. Das Führungselement kann beispielsweise auch aus Kunststoff oder aus einem anderen Material hergestellt sein und eine geeignete Beschichtung oder Umhüllung aufweisen. In Abhängigkeit von den zu transportierenden Produkten kann die Beschichtung oder Umhüllung aus einem für das betreffende Produkt besonders geeigneten Material bestehen. So kann bei Produkten, die für den menschlichen Verzehr vorgesehen sind, wie beispielsweise bei Tabletten oder Kapseln, die Führungsfläche des Führungselements aus einem möglichst abriebfesten und für den menschlichen Verzehr unbedenklichen Material bestehen. Werden harte oder scharfkantige Produkte wie beispielsweise Schrauben oder metallische Kleinteile mit dem Aufgabeband über die Führungsfläche des Führungselements verschoben, wird zweckmäßigerweise ein möglichst hartes und reibungsarmes Material für die Führungsfläche verwendet.

Die Führungsfläche kann dabei eine möglichst ebene Gleitfläche ohne eine dreidimensionale Profilierung oder Strukturierung bilden, deren Verlauf dem Verlauf des Aufgabebands angepasst ist und folgt, so dass die in den Löchern in dem Aufgabeband befindlichen Produkte Möglichkeit ausschließlich in der durch das Aufgabeband vorgegebenen Transportrichtung bewegt werden und keine Unebenheiten in der Führungsfläche des Führungselements eine Verlagerung quer zu der Transportrichtung erzwingen.

Es ist ebenfalls denkbar und im Hinblick auf eine möglichst zuverlässige Befüllung der einzelnen Löcher in dem Aufgabeband vorteilhaft, dass die Führungsfläche des Führungselements eine dreidimensionale Strukturierung aufweist, sodass die über die Führungsfläche transportierten Produkte während des Transports vibrieren. Die Führungsfläche kann die dreidimensionale Strukturierung insbesondere im Bereich einer gegebenenfalls großflächigen Vorratsbehälteröffnung aufweisen, um ein zuverlässiges Befüllen der einzelnen Löcher und eine gegebenenfalls gewünschte Ausrichtung der einzelnen Produkte in dem jeweils zugeordneten Loch zu unterstützen. Die dreidimensionale Strukturierung sollte zweckmäßigerweise beispielsweise an die Größe der Löcher, an den üblicherweise geringen Abstand der Führungsfläche von dem Aufgabeband und an eine für den Betrieb vorgesehene Transportgeschwindigkeit des Aufgabebands angepasst sein, sodass ein unbeabsichtigtes Hindurchfallen einzelner Produkte durch ein zugeordnetes Loch ebenso vermieden werden kann wie ein unbeabsichtigtes wieder Hinauskatapultieren eines bereits in einem Loch befindlichen Produkts.

Einer optionalen Ausgestaltung zufolge ist vorgesehen, dass das Aufgabeband und die zugeordnete Führungsfläche zumindest zunächst in einem Aufnahmeabschnitt ab dem Vorratsbehälter eine nach oben gerichtete Steigung aufweisen. Durch eine nach oben gerichtete Steigung des Aufgabebands im Bereich der Vorratsbehälteröffnung kann mit einfachen Mitteln eine zuverlässige Befüllung der in dem Aufgabeband befindlichen Löcher mit Produkten aus dem Vorratsbehälter erfolgen. Einzelne Produkte, die nicht in ein zugeordnetes Loch in dem Aufnahmeband gelangen, sondern auf einer Oberfläche des Aufnahmebands anliegen und gegebenenfalls etwas mittransportiert werden, können auf Grund der Steigung des Aufgabebands in einfacher Weise von der Oberseite des Aufgabebands abgestreift werden, um wieder längs der Oberseite des Aufgabebands nach unten zu rutschen oder zu rollen und zu der Vorratsbehälteröffnung zu gelangen.

Um an einem Ende des Führungselements eine möglichst zuverlässige Aufgabe der aus den Löschern des Aufgabebands herausgleitenden Produkte auf das Förderband zu ermöglichen ist gemäß einer Ausgestaltung vorgesehen, dass das Aufgabeband und die zugeordnete Führungsfläche in einem in den Aufgabebereich auf der Oberseite des Förderbands mündenden Abgabeabschnitt eine an eine Förderbandsteigung des Förderbands angepasste Steigung aufweisen, die sich um weniger als 10 Grad von der Förderbandsteigung unterscheidet. In vielen Fällen dürfte es vorteilhaft sein, wenn die Steigung des Aufgabebands in dem Aufgabeabschnitt identisch mit der Förderbandsteigung ist. Es kann ebenfalls vorteilhaft sein, dass das Aufgabeband in einem spitzen Winkel auf das Förderband zuläuft und sich bis unmittelbar an die Oberseite des Förderbands annähert, um anschließend von dem Förderband weggeführt zu werden und die in den Löchern in dem Aufgabeband befindlichen Produkte im Bereich der größten Annäherung an das Förderband auf das Förderband aufzugeben.

Um bei der Übergabe der Produkte von dem Aufgabeband auf das Förderband eine unerwünschte Verlagerung der Produkte möglichst gering zu halten ist erfindungsgemäß vorgesehen, dass eine Transportgeschwindigkeit des Aufgabebands und eine Fördergeschwindigkeit des Förderbands synchronisiert sind. Die Transportgeschwindigkeit des Aufgabebands entspricht dabei zweckmäßigerweise möglichst exakt der Fördergeschwindigkeit des Förderbands, sodass die Produkte während der Übergabe von dem Aufgabeband zu dem Förderband keine Beschleunigung in der Förderrichtung des Förderbands erfahren, die zu einer unerwünschten Verlagerung der aufgegebenen Produkte führen könnte. Durch eine geeignete Synchronisierungseinrichtung kann erreicht werden, dass die Fördergeschwindigkeit des Förderbads zeitlich variiert werden kann, um beispielsweise innerhalb einer größeren Bearbeitungsanlage an wechselnde Bearbeitungsvorgänge oder Bearbeitungsabläufe angepasst zu werden, wobei die Transportgeschwindigkeit des Aufgabebands jeweils an die Fördergeschwindigkeit des Förderbands angepasst wird.

Um nach der Aufgabe der Produkte auf das Förderband eine vorgegebene Anordnung der Produkte auf dem Förderband zu unterstützen oder gegebenenfalls zusätzlich vorzugeben ist erfindungsgemäß vorgesehen, dass das Förderband quer zur Förderrichtung verlaufende Positionierelemente zur Vorgabe von Förderpositionen der Produkte aufweist. Das Förderband kann zu dem Zweck beispielsweise eine wellenförmige Profilierung aufweisen. Es ist ebenfalls denkbar, dass das Förderband in Reihen oder in Zeilen angeordnete Vertiefungen oder vorspringende Ausformungen aufweist, durch welche eine Position der Produkte auf dem Förderband vorgegeben werden kann.

Erfindungsgemäß ist vorgesehen, dass die Positionierelemente Walzen sind, die jeweils um eine quer zur Förderrichtung verlaufende Drehachse drehbar gelagert sind und deren Abstand in Förderrichtung geringer als ein kleinster Durchmesser der Produkte ist. Die Produkte werden dann in einzelnen Reihen auf dem Förderband angeordnet, die durch die zwischen den einzelnen Walzen gebildeten Vertiefungen vorgegeben werden. Die Walzen, die in Förderrichtung beispielsweise mit einem umlaufenden Kettenantrieb verlagert werden, können jeweils um deren Drehachse gedreht werden und diese Drehbewegung auf die zwischen zwei benachbarten Walzen angeordneten Produkte übertragen, sodass eine entsprechende Drehbewegung der Produkte erzwungen wird. Auf einem derartigen Förderband, dass durch drehbar gelagerte und in Förderrichtung verlagerte Walzen gebildet wird, können die einzelnen Produkte aufgrund ihrer Drehbewegung von allen Seiten betrachtet und dabei einer Qualitätskontrolle unterzogen werden. Auch eine automatisiert durchgeführte Qualitätskontrolle ist in einfacher und kostengünstiger Weise möglich.

Nachfolgend werden exemplarische Ausführungsbeispiele näher erläutert, die in der Zeichnung jeweils schematisch dargestellt sind. Es zeigt:
Figur 1 eine schematische Schnittansicht einer erfindungsgemäßen Aufgabeeinrichtung mit einem Vorratsbehälter, mit einem unmittelbar über einem Führungselement angeordneten Aufgabeband und mit einem Förderband,
Figur 2 eine abweichende Ausgestaltung der erfindungsgemäßen Aufgabeeinrichtung, wobei das Aufgabeband in einem Aufnahmeabschnitt ab dem Vorratsbehälter eine nach oben gerichtete Steigung aufweist,
Figur 3 eine vergrößert dargestellte Teilansicht eines Übergangsbereichs von dem Aufgabeband zu einem aus drehbar gelagerten Walzen gebildeten Förderband,
Figur 4 eine perspektivische Ansicht eines in Figur 3 gezeigten Übergangsbereichs einer ähnlich ausgestalteten Aufgabeeinrichtung, und
Figur 5 eine schematische Schnittansicht einer wiederum abweichend ausgestalteten erfindungsgemäßen Aufgabeeinrichtung in einem Bereich um den Vorratsbehälter.

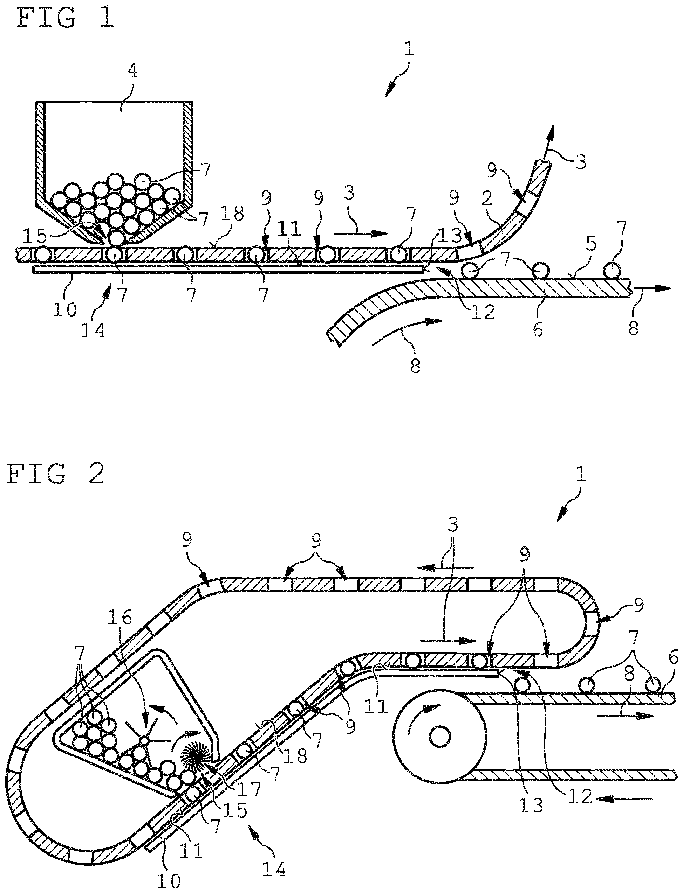

Eine in den Figuren 1 bis 4 in unterschiedlichen Varianten dargestellte Aufgabeeinrichtung 1 weist ein Aufgabeband 2 auf, das durch eine in den Figuren nicht näher dargestellte Zwangsführung in einer durch einen Pfeil 3 angedeuteten Transportrichtung von einem Vorratsbehälter 4 ist zu einer Oberseite 5 eines Förderbands 6 geführt wird. In dem Vorratsbehälter 4 befindet sich eine Anzahl von Produkten 7, die in einer kontrollierten Weise auf das Förderband 6 aufgegeben werden sollen, um anschließend von dem Förderband 6 in einer durch einen Pfeil 8 angedeuteten Förderrichtung von dem Vorratsbehälter 4 zu einem in den Figuren nicht dargestellten Zielort befördert zu werden. Bei dem in den exemplarischen Ausführungsbeispielen dargestellten Produkten 7 handelt es sich um Arzneimittelkapseln, wobei auch nahezu beliebige andere Produkte von dem Vorratsbehälter 4 auf das Förderband 6 aufgegeben werden könnten, die aus einem Vorratsbehälter 4 abgegeben werden können.

In dem Aufgabeband 2 sind in Transportrichtung 3 beabstandet zueinander mehrere Löcher 9 ausgebildet. Die Abmessungen eines jeden Lochs 9 sind an die Abmessungen der Produkte 7 angepasst, sodass von jedem Loch 9 nur ein einziges Produkt 7 aufgenommen werden kann.

Unmittelbar unterhalb des Aufgabebands 2 ist ein Führungselement 10 mit einer eben ausgebildeten und dem Aufgabeband 2 zugewandten Führungsfläche 11 so angeordnet, dass ein in einem Loch 9 in dem Aufgabeband 2 aufgenommenes Produkt 7 auf der Führungsfläche 11 des Führungselements 10 aufliegt und von dem Aufgabeband 2 in der Transportrichtung 3 über die Führungsfläche 11 hinweg transportiert wird. Durch die Aufnahme der Produkte 7 in jeweils einem zugeordneten Loch 9 in dem Aufgabeband 2 erfolgt ohne größeren konstruktiven Aufwand eine Vereinzelung der einzelnen Produkte 7 und eine durch die Anordnung der Löcher 9 in dem Aufgabeband 2 vorgegebene Positionierung der einzelnen Produkte 7 in dem Aufgabeband 2. Die Produkte 7 werden von dem Aufgabeband 2 über die Führungsfläche 11 des Führungselements 10 hinweg bis zu dem Förderband 6 transportiert.

In einem Aufgabebereich 12 auf der Oberseite 5 des Förderbands 6 endet das Führungselement 10, wobei die Führungsfläche 11 durch eine Randkante 13 begrenzt und beendet wird. Sobald ein mit einem Produkt 7 gefülltes Loch 9 in dem Aufgabeband 2 über die Randkante 13 und damit seitlich über die Führungsfläche 11 des Führungselements 10 hinaustransportiert wird, wird das in dem Loch 9 befindliche Produkt 7 nicht durch das Führungselement 10 in dem Loch 9 zurückgehalten und kann nach unten auf die Oberseite 5 des Förderbands 6 herabfallen. Dadurch wird die Position und Anordnung des Produkts 7 auf der Oberseite 5 des Förderbands 6 vorgegeben. Zweckmäßigerweise ist ein Abstand zwischen dem Aufgabeband 2 und der Oberseite 5 des Förderbands 6 möglichst gering.

Erfindungsgemäß ist eine Transportgeschwindigkeit des Aufgabebands 2 mit einer Fördergeschwindigkeit des Förderbands 6 synchronisiert, sodass das Aufgabeband 2 und das Förderband 6 in dem Aufgabebereich 12 gleich schnell bewegt werden und das Produkt 7 bei dem Übergang von dem Aufgabeband 2 zu dem Förderband 6 keine in der Förderrichtung 8 gerichtete Beschleunigung erfährt.

Bei dem in Figur 2 dargestellten Ausführungsbeispiel weist das Aufgabeband 2 in einem Aufnahmeabschnitt 14, in welchem auch der Vorratsbehälter 4 angeordnet ist, eine nach oben gerichtete Steigung auf. Durch eine ebenso wie bei dem in Figur 1 dargestellten Ausführungsbeispiel dem Aufgabeband 2 zugewandten Vorratsbehälteröffnung 15 gelangen die einzelnen in dem Vorratsbehälter 4 befindlichen Produkte 7 an das Aufgabeband 2 und können von einem an der Vorratsbehälteröffnung 15 vorbeitransportierten Loch 9 in dem Aufgabeband 2 aufgenommen werden. In dem Vorratsbehälter 4 können zusätzliche Produktfördereinrichtungen 16 angeordnet sein, die einzelne Produkte 7 zu der Vorratsbehälteröffnung 15 hinführen. Durch eine Abstreifbürste 17 kann verhindert werden, dass auf einer Oberseite 18 des Aufgabebands 2 aufliegende und nicht von einem Loch 9 aufgenommene Produkte 7 von der Oberseite 18 abgestreift und wieder in Richtung der Vorratsbehälteröffnung 15 bewegt werden. In einem weiteren Verlauf des als Endlosband ausgebildeten Aufgabebands 2 in einem in den Aufgabebereich 12 mündenden Abgabeabschnitt 19 eine an eine Förderbandsteigung des Förderbands 6 angepasste Steigung auf, die sich bei dem in Figur 2 exemplarisch gezeigten Ausführungsbeispiel nicht von der Förderbandsteigung unterscheidet.

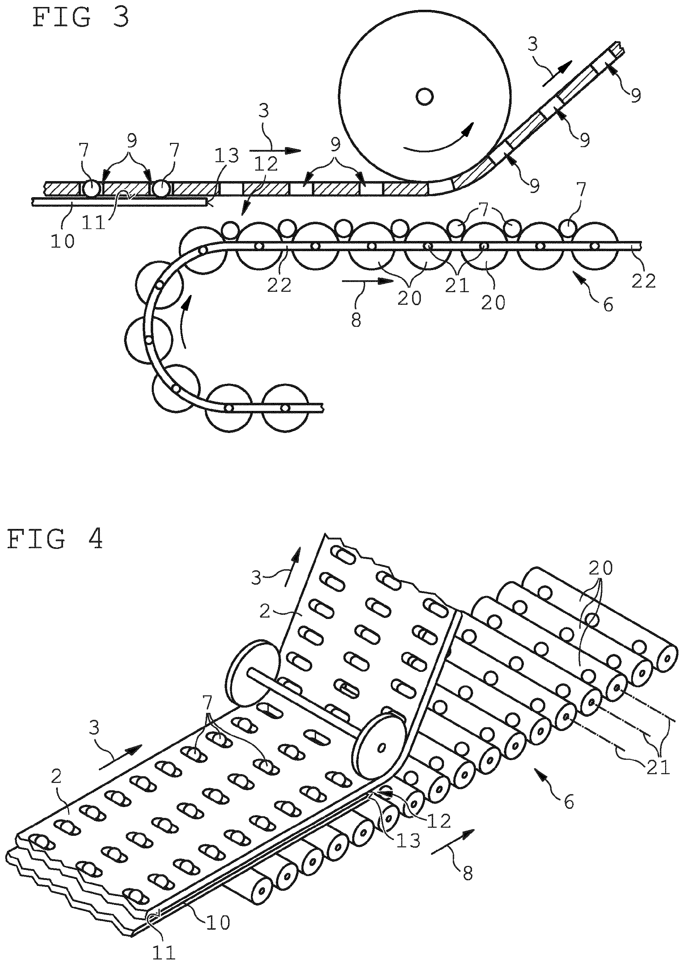

Bei dem in Figur 3 dargestellten Ausführungsbeispiel, wobei lediglich ein Bereich um den Aufgabebereich 12 vergrößert dargestellt ist, wird das Förderband 6 von einer Anzahl von Walzen 20 gebildet, die jeweils um eine quer zu der Förderrichtung 8 gerichtete Drehachse 21 drehbar gelagert und in der Förderrichtung 8 beabstandet zueinander an einer Förderkette 22 festgelegt sind. Ein freier Abstand zwischen benachbart an der Förderkette 22 angeordneten Walzen 20 ist geringer als ein kleinster Durchmesser der auf diesem Förderband 6 zu befördernden Produkte 7, sodass sich die einzelnen Produkte 7 jeweils zwischen zwei benachbarten Walzen 20 anordnen und während der Beförderung mit dem Förderband dort befinden. Bei rollfähigen Produkten 7, beispielsweise Tabletten oder Kapseln, kann eine Drehbewegung der Walzen 20 auf die rollfähigen Produkte 7 übertragen und diese zu einer Drehbewegung angetrieben werden. Die sich auf dem Förderband drehenden Produkte 7 können dann in einfacher Weise von vielen oder allen Seiten optisch erfasst und beispielsweise gezählt werden oder einer Qualitätskontrolle unterzogen werden.

In Figur 4 ist ein Ausführungsbeispiel, welches konstruktiv vergleichbar mit dem in Figur 3 dargestellten Ausführungsbeispiel ist, in dem Bereich um den Aufgabenbereich in einer perspektivischen Ansicht gezeigt.

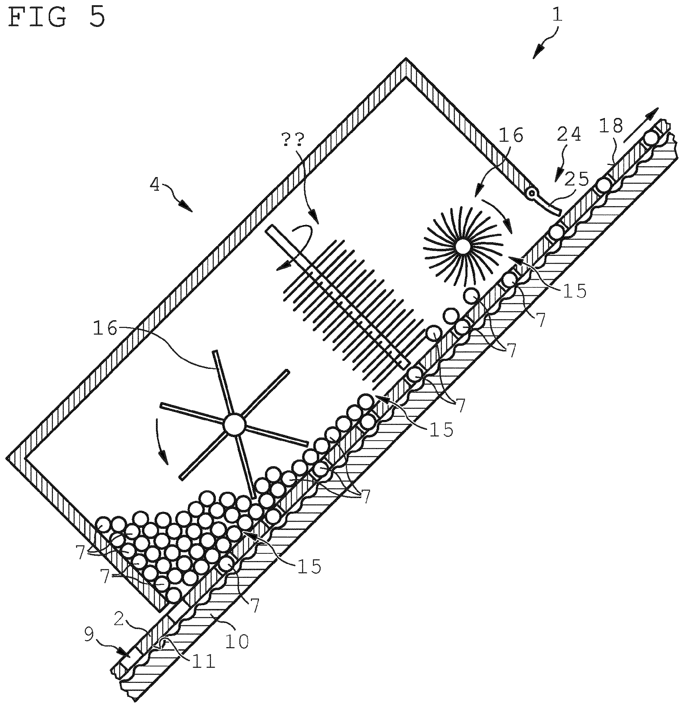

Bei der in Figur 5 exemplarisch dargestellten Ausgestaltungsvariante der erfindungsgemäßen Aufgabeeinrichtung 1 weist der im Wesentlichen quaderförmig ausgestaltete und hinsichtlich seiner Breite an eine Breite des Aufgabebands 1 angepasste Vorratsbehälter 4 eine sich über seine gesamte Unterseite erstreckende Vorratsbehälteröffnung 15 auf. Die in dem Vorratsbehälter 4 befindlichen Produkte 7 können über eine gesamte Länge des Vorratsbehälters 4 in Kontakt mit dem unmittelbar unterhalb der Vorratsbehälteröffnung 15 vorbei transportierten Aufgabeband 2 kommen und in eines der darin angeordneten Löcher 9 hineinfallen. In dem Vorratsbehälter 15 können ein oder mehrere Produktfördereinrichtungen 16 angeordnet sein, die beispielsweise als Bürsten- oder Lippenwalzen ausgebildet sind und während des Betriebs um eine horizontal verlaufende Drehachse rotieren. Um auch eine gleichmäßige Verteilung der einzelnen Produkte 7 über die gesamte Breite des Aufgabebands 2 zu unterstützen können weiterhin um eine vertikale Drehachse rotierende Bürsten- oder Lippenwalzen 23 in dem Vorratsbehälter 4 angeordnet sein. Dabei sollen die Begriffe horizontal und vertikal jeweils auf die Ausrichtung der Oberfläche 18 des Aufgabebands 2 bezogen sein, da die Transportrichtung 3 das Aufgabeband 2 eine Steigung aufweisen und das Aufgabeband 2 entsprechend geneigt sein kann. Die rotierenden Bürsten- oder Lippenwalzen 16, 23 können auch eine in einem nahezu beliebigen Winkel zu der Oberfläche 18 des Aufgabebands 2 geneigte Ausrichtung aufweisen.

Zusätzlich zu einer Abstreifbürste 17 können im Bereich einer Randkante 24 der Vorratsbehälteröffnung 15 beispielsweise elastische Lippenabstreifer 25 angeordnet sein, um einerseits einen unerwünschten Austritt einzelner Produkte 7 außerhalb der Löcher 9 in dem Aufgabeband 2 aus dem Vorratsbehälter 4 zu verhindern und gleichzeitig durch die elastische Lippe des Lippenabstreifers 25 eine unerwünschte Blockade der Aufgabeeinrichtung 1 oder eine Beschädigung einzelner Produkte 7 zu vermeiden, die von dem Aufgabeband 2 an die Randkante 24 transportiert werden und dort aus der Vorratsbehälteröffnung 15 austreten wollen.

Die Führungsfläche 11 des Führungselements 10 weist eine dreidimensionale Strukturierung auf. Die dreidimensionale Strukturierung kann beispielsweise eine wellenförmige Oberflächengestaltung sein oder durch eine Anzahl gleichmäßig oder ungleichmäßig verteilter und in Richtung des Aufgabebands 2 vorspringender Ausformungen aufweisen. Durch die dreidimensionale Strukturierung der Führungsfläche 11 des Führungselements 10 werden die in den Löchern 9 befindlichen Produkte 7 während des Transports längs der Führungsfläche 11 zu Vibrationen angeregt und diese Vibrationen auf gegebenenfalls an den vibrierenden Produkten 7 in den Löchern 9 angrenzende Produkte 7 in dem Vorratsbehälter 4 übertragen, wodurch ein zuverlässiges Befüllen der einzelnen Löcher 9 mit jeweils einem Produkt 7 über die Vorratsbehälteröffnung 15 hinweg in vorteilhafter Weise unterstützt werden kann.

## Patentansprüche

1. Förderband (6) mit einer Aufgabeeinrichtung (1) zur Aufgabe von Produkten (7) aus einem Vorratsbehälter (4) auf das in einer Förderrichtung (8) bewegtes Förderband (6), wobei ein Aufgabeband (2) an einer Vorratsbehälteröffnung (15) an einer Unterseite des Vorratsbehälters (4) zu fördernde Produkte (7) aufnimmt und zu einer Oberseite (5) des Förderbands (6) transportiert, um die Produkte (7) in einem Aufgabebereich (12) auf der Oberseite (5) des Förderbands (6) auf das Förderband (6) abzugeben, wobei das Aufgabeband (2) eine Anzahl von Löchern (9) aufweist, deren Abmessungen derart an die zu fördernden Produkte (7) angepasst ist, dass jeweils ein Produkt (7) durch ein zugeordnetes Loch (9) hindurch fallen kann, und wobei an einer Unterseite des Aufgabebands (2) ein sich von der Vorratsbehälteröffnung (15) bis zu dem Aufgabebereich (12) auf der Oberseite (5) des Förderbands (6) erstreckendes Führungselement (10) mit einer unmittelbar unterhalb des Aufgabebands (2) angeordneten Führungsfläche (11) angeordnet ist, so dass die Führungsfläche (11) ein Hindurchfallen der Produkte (7) durch die Löcher (9) des Aufgabebandes (2) verhindert, bis die Produkte (7) in dem Aufgabebereich (12) auf die Oberseite (5) des Förderbands (6) abgegeben werden, wobei eine Transportgeschwindigkeit des Aufgabebands (2) und eine Fördergeschwindigkeit des Förderbands (6) synchronisiert sind, **dadurch gekennzeichnet,**
**dass** das Förderband (6) quer zur Förderrichtung (8) verlaufende Positionierelemente zur Vorgabe von Förderpositionen der Produkte (7) aufweist, und dass die Positionierelemente Walzen (20) sind, die jeweils um eine quer zur Förderrichtung (8) verlaufende Drehachse (21) drehbar gelagert sind und deren Abstand in Förderrichtung (8) geringer als ein kleinster Durchmesser der Produkte (7) ist.

2. Förderband (6) mit Aufgabeeinrichtung (1) nach Anspruch 1, **dadurch gekennzeichnet, dass** in dem Aufgabeband (2) quer zur Transportrichtung (3) mehrere Löcher (9) beabstandet zueinander angeordnet sind.

3. Förderband (6) mit Aufgabeeinrichtung (1) nach Anspruch 1 oder Anspruch 2, **dadurch gekennzeichnet, dass** in dem Aufgabeband (2) die Löcher (9) matrixförmig angeordnet sind.

4. Förderband (6) mit Aufgabeeinrichtung (1) nach einem der vorausgehenden Ansprüche, **dadurch gekennzeichnet, dass** das Führungselement (10) ein unterhalb des Aufgabebands (2) angeordnetes Führungsblech ist.

5. Förderband (6) mit Aufgabeeinrichtung (1) nach einem der vorausgehenden Ansprüche, **dadurch gekennzeichnet, dass** die Führungsfläche (11) des Führungselements (10) eine reibungsarme und abriebfeste ebene Gleitfläche bildet.

6. Förderband (6) mit Aufgabeeinrichtung (1) nach einem der vorausgehenden Ansprüche 1 bis 4, **dadurch gekennzeichnet, dass** die Führungsfläche (11) des Führungselements (10) eine dreidimensionale Strukturierung aufweist, sodass die über die Führungsfläche (11) transportierten Produkte (7) während des Transports vibrieren.

7. Förderband (6) mit Aufgabeeinrichtung (1) nach einem der vorausgehenden Ansprüche, **dadurch gekennzeichnet, dass** das Aufgabeband (2) und die zugeordnete Führungsfläche (11) zumindest zunächst in einem Aufnahmeabschnitt (14) ab dem Vorratsbehälter (4) eine nach oben gerichtete Steigung aufweisen.

8. Förderband (6) mit Aufgabeeinrichtung (1) nach einem der vorausgehenden Ansprüche, **dadurch gekennzeichnet, dass** das Aufgabeband (2) und die zugeordnete Führungsfläche (11) in einem in den Aufgabebereich (12) auf der Oberseite (5) des Förderbands (6) mündenden Abgabeabschnitt (19) eine an eine Förderbandsteigung des Förderbands (6) angepasste Steigung aufweisen, die sich um weniger als 10 Grad von der Förderbandsteigung unterscheidet.

## Claims

1. Conveyor belt (6) having a feeding device (1) for feeding products (7) out of a storage container (4) onto a conveyor belt (6) moving in a conveyor direction (8), wherein a feeding belt (2) at a storage container opening (15) on a lower side of the storage container (4) receives products (7) to be conveyed and transports them to an upper side (5) of the conveyor belt (6), in order to feed the products (7) to the conveyor belt (6), in a feeding region (12) on the upper side (5) of the conveyor belt (6), wherein the feeding belt (2) comprises a number of holes (9), the dimensions of which are adapted to the products (7) to be conveyed such that a respective product (7) can fall through an associated hole (9), and wherein a guiding element (10) extending from the storage container opening (15) to the feeding region (12) on the upper side (5) of the conveyor belt (6), having a guiding surface (11) arranged directly beneath the feeding belt (2), is arranged on a lower side of the feeding belt (2), in such a way that the guiding surface (11) prevents the products (7) from falling through the holes (9) of the feeding belt (2) until the products (7) in the feeding region (12) are fed onto the upper side (5) of the conveyor belt (6), wherein a transport speed of the feeding belt (2) and a conveying speed of the conveyor belt (6) are synchronised, **characterised in that** the conveyor belt (6) comprises positioning elements running transverse to the conveyor direction (8) for defining conveying positions of the products (7), and **in that** the positioning elements are rollers (20), each of which are mounted so as to be rotatable about an axis of rotation (21) running transverse to the conveyor direction (8) and the distance between which is smaller in the conveyor direction (8) than a smallest diameter of the products (7).

2. Conveyor belt (6) having a feeding device (1) according to claim 1, **characterised in that** a plurality of holes (9) is arranged in the feeding belt (2) at a distance from one another transverse to the transport direction (3).

3. Conveyor belt (6) having a feeding device (1) according to claim 1 or claim 2, **characterised in that** the holes (9) are arranged in a matrix in the feeding belt (2).

4. Conveyor belt (6) having a feeding device (1) according to any one of the preceding claims, **characterised in that** the guiding element (10) is a guide plate arranged below the feeding belt (2).

5. Conveyor belt (6) having a feeding device (1) according to any one of the preceding claims, **characterised in that** the guiding surface (11) of the guiding element (10) forms a low-friction and abrasion-resistant flat sliding surface.

6. Conveyor belt (6) having a feeding device (1) according to any one of the preceding claims 1 to 4, **characterised in that** the guiding surface (11) of the guiding element (10) has a three-dimensional texturing, such that the products (7) transported over the guiding surface (11) vibrate during transport.

7. Conveyor belt (6) having a feeding device (1) according to any one of the preceding claims, **characterised in that** the feeding belt (2) and the associated guiding surface (11) exhibit an upward gradient at least initially in a receiving section (14) starting from the storage container (4).

8. Conveyor belt (6) having a feeding device (1) according to any one of the preceding claims, **characterised in that** the feeding belt (2) and the associated guiding surface (11) in a delivery section (19) leading to the feeding region (12) on the upper side (5) of the conveyor belt (6), exhibit a gradient adapted to a conveyor belt gradient of the conveyor belt (6), which differs from the conveyor belt gradient by less than 10 degrees.

## Revendications

1. Bande de convoyage (6) avec un dispositif de distribution (1) destiné à distribuer des produits (7) provenant d'un contenant de stockage (4) sur la bande de convoyage (6) déplacée dans une direction de convoyage (8), dans laquelle une bande de distribution (2) reçoit des produits (7) à convoyer sur une face inférieure du contenant de stockage (4) sur une ouverture de contenant de stockage (15) et les transporte vers une face supérieure (5) de la bande de convoyage (6) pour distribuer les produits (7) sur la bande de convoyage (6) sur la face supérieure (5) de la bande de convoyage (6) dans une zone de distribution (12), dans laquelle la bande de distribution (2) présente un nombre de trous (9) dont les dimensions sont adaptées de telle manière aux produits (7) à convoyer que respectivement un produit (7) peut tomber à travers un trou (9) associé, et dans laquelle un élément de guidage (10) avec une surface de guidage (11) disposée directement sous la bande de distribution (2), lequel s'étend depuis l'ouverture de contenant de stockage (15) jusqu'à la zone de distribution (12) sur la face supérieure (5) de la bande de convoyage (6) est disposé sur une face inférieure de la bande de distribution (2) de sorte que la surface de guidage (11) empêche une chute des produits (7) à travers les trous (9) de la bande de distribution (2) jusqu'à ce que les produits (7) soient distribués sur la face supérieure (5) de la bande de convoyage (6) dans la zone de distribution (12), dans laquelle une vitesse de transport de la bande de distribution (2) et une vitesse de convoyage de la bande de convoyage (6) soient synchronisées, **caractérisée en ce**
**que** la bande de convoyage (6) présente des éléments de positionnement s'étendant de manière transversale par rapport à la direction de convoyage (8) pour spécifier des positions de convoyage des produits (7), et que les éléments de positionnement sont des cylindres (20) qui sont montés de manière à pouvoir tourner respectivement autour d'un axe de rotation (21) s'étendant de manière transversale par rapport à la direction de transport (8) et dont la distance dans la direction de convoyage (8) est inférieure à un diamètre le plus petit des produits (7).

2. Bande de convoyage (6) avec un dispositif de distribution (1) selon la revendication 1, **caractérisée en ce que** plusieurs trous (9) sont disposés de manière espacée les uns par rapport aux autres de manière transversale dans la direction de transport (3) dans la bande de distribution (2).

3. Bande de convoyage (6) avec un dispositif de distribution (1) selon la revendication 1 ou la revendication 2, **caractérisée en ce que** les trous (9) sont disposés en forme de matrice dans la bande de distribution (2).

4. Bande de convoyage (6) avec un dispositif de distribution (1) selon l'une quelconque des revendications précédentes, **caractérisée en ce que** l'élément de guidage (10) est une tôle de guidage disposée sous la bande de distribution (2).

5. Bande de convoyage (6) avec un dispositif de distribution (1) selon l'une quelconque des revendications précédentes, **caractérisée en ce que** la surface de guidage (11) de l'élément de guidage (10) forme une surface de glissement plane à faible frottement et résistante à l'abrasion.

6. Bande de convoyage (6) avec un dispositif de distribution (1) selon l'une quelconque des revendications 1 à 4, **caractérisée en ce que** la surface de guidage (11) de l'élément de guidage (10) présente une structuration tridimensionnelle si bien que les produits (7) transportés par l'intermédiaire de la surface de guidage (11) vibrent pendant le transport.

7. Bande de convoyage (6) avec un dispositif de distribution (1) selon l'une quelconque des revendications précédentes, **caractérisée en ce que** la bande de distribution (2) et la surface de guidage (11) associée présentent au moins en premier lieu dans une section de réception (14) à partir du contenant de stockage (4) une pente dirigée vers le haut.

8. Bande de convoyage (6) avec un dispositif de distribution (1) selon l'une quelconque des revendications précédentes, **caractérisée en ce que** la bande de distribution (2) et la surface de guidage (11) associée présentent, dans une section de distribution (19) débouchant dans la zone de distribution (12) sur la face supérieure (5) de la bande de convoyage (6), une pente adaptée à une pente de bande de convoyage de la bande de convoyage (6), qui est différente de la pente de bande de convoyage d'une valeur inférieure à 10 degrés.
